# EUROPEAN PATENT APPLICATION

(11) **EP 2 698 536 A1**
(43) Date of publication of application: **19.02.2014**
(21) Application number: 11863493.0
(22) Date of filing: 13.04.2011
(51) Int. Cl.: F03G 6/06, F24J 2/16, F24J 2/38, F24J 2/40, F24J 2/54

(54) **VARIABLE GEOMETRY SYSTEM FOR CAPTURING THERMOSOLAR ENERGY**

(71) Applicant: Centro Tecnológico Avanzado de Energías Renovables, 41092 Sevilla (ES); Universidad de Sevilla, 41012 Sevilla (ES)
(72) Inventor: RUÍZ HERNÁNDEZ, Valeriano, E-Sevilla 41092 (ES); LILLO BRAVO, Isidoro, E-Sevilla 41092 (ES); SILVA PÉREZ, Manuel Antonio, E-Sevilla 41092 (ES); LOBO MÁRQUEZ, Gonzalo, E-Sevilla 41092 (ES); DÍAZ ANDRADES, Francisco, E-Sevilla 41092 (ES); DEL POZO POLIDORO, Enrique, E-Sevilla 41092 (ES)
(74) Representative: Pons Ariño, Angel
(86) International application number: PCT/ES2011/070252
(87) International publication number: WO 2012/140281

(57) **Abstract**

The invention relates to a tower-type system (11) for concentrating and capturing thermosolar energy, comprising a tower (13) having a fixed part (81) and a movable part (82), wherein the movable part ascends or descends along a shaft of the tower (13) and is provided with a gondola (83) that can perform azimuthal rotation, and wherein an assembly of heliostats (12) that can move around the tower (13) direct the solar radiation toward a panel.

## Description

### FIELD OF THE INVENTION

The present invention relates to a tower-type concentrating solar thermal energy capture system wherein an array of individual concentrators or heliostats directs the solar radiation towards the receiver.

### BACKGROUND

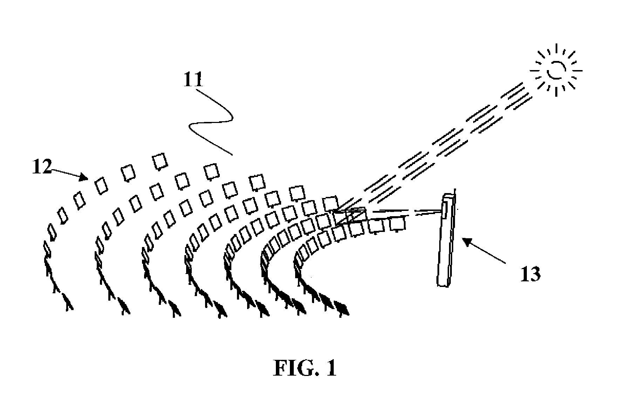

In relation to figure 1, a solar thermal energy capture system is known in the state of the art, namely a central tower system comprising a plurality of heliostats making up a reflector device having two degrees of freedom that enables orientation thereof in any direction in space which, properly oriented individually by an aiming system based on light sensors or solar equations, allow concentration of the radiation received from the sun by the heliostat array onto a receiver, generally disposed on a tower at a certain height for such purpose, thereby achieving high energy density in said receiver and enabling use thereof to generate electricity, by means of a classic steam cycle, or for developing highly endothermic reactions.

In summary, a fixed receiver disposed on a tower receives radiation flux from a plurality of heliostats also fixed, although having two rotational degrees of freedom, generally azimuthally mounted, although they can also, theoretically, equatorially mounted.

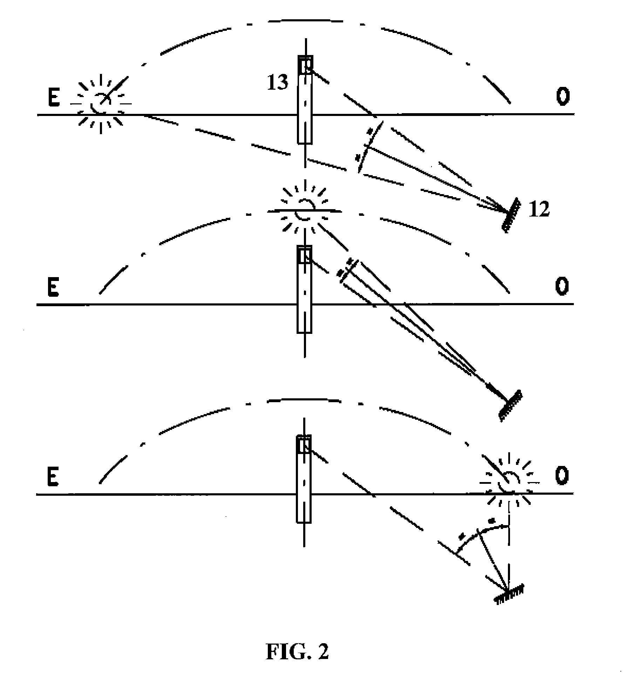

In relation to figures 2 to 4, given that the angle formed between the incident ray and the normal is equal to that formed between the reflected ray and the normal, the actuation of the heliostats is aimed at ensuring that the optical axis of their mirrors constantly points in the direction of the bisector of the angle formed between the sun, the heliostat and the tower-top receiver, which requires considerable precision in the construction and control thereof. Since during one day the sun moves along an apparent path, which is in fact due to the Earth's rotation, which starts approximately in the east and ends approximately in the west, reaching its highest point on crossing the local meridian, the sun's location coordinates being variable in accordance with local latitude, the time of day or hour angle and the season or declination angle, the actuation path of each heliostat must start in the direction of the bisector of the angle formed by the sun at sunrise, the heliostat and the receiver, and end in the direction of the bisector of the angle formed by the sun at sunset, the heliostat and the receiver, accordingly crossing the direction of the bisector of the angle formed by the sun crossing the meridian, the heliostat and the receiver.

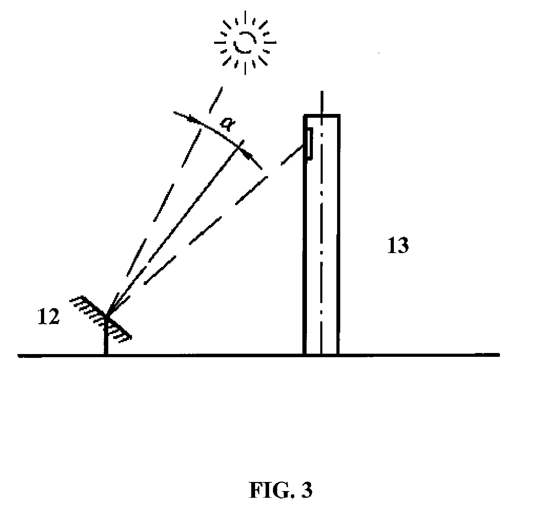

Figure 3 shows the angle α formed between the normal to the optical plane of the heliostat and the incident ray from the sun. This implies that the energy leveraged in each position is equal to the product of the energy flow multiplied by the area of the heliostat and by the cosine of α, being reflection efficiencies also needed to be considered.

A disadvantage of the aforementioned system is that the greater the angle α, the smaller its cosine, thereby reducing energy capture for purely geometric reasons, which is known as the "cosine effect".

The amplitude of the angle α at certain times of day and days of the year causes a loss in the potential energy capture capacity of the tower solar power plants, which until now has been assumed as an intrinsic limitation of the system.

In heliotrope technology in general and photovoltaic solar collector technology in particular, there are a number of examples of configurations having one and two degrees of freedom aimed at minimising the cosine effect by means providing the heliostats with the most favourable and direct possible orientation towards the sun. However, these devices, due to their very nature, only capture the flow corresponding to their own surface, dispensing with the reflection effect and concentration of energy associated with the heliostat fields.

### GENERAL DESCRIPTION OF THE INVENTION

The present invention seeks to overcome one or more of the previously expounded drawbacks by means of a variable-geometry solar thermal energy capture system such as that claimed in the claims.

An object of the concentrating solar thermal system is to provide a variable geometry to a tower of the solar thermal system where the tower is adapted to be moved along a vertical axis of the tower and rotated with respect to the vertical axis (also called rotation axis) of the tower, in such a manner that the receiver disposed on the upper distal end of a tower absorbs the incident solar radiation redirected towards it by an array of fixed and/or mobile heliostats.

On equipping the tower with a rotating nacelle, the maximum use of the energy captured by it is ensured, for example by aligning the receiver axis with the nacelle's rotation axis, thereby totally preventing the risk of blur during the movements of the system composed of heliostats and mobile towers, thereby achieving the maximum possible energy capture.

Another object of the concentrating solar thermal system is to provide heliostats mounted on a mobile frame that moves the heliostat horizontally to prevent the appearance of shadows produced by other heliostats or by the tower itself, and seeks the best possible orientation angle thereof, thereby improving energy capture.

The heliostats are movable at will in accordance with the position of the sun at any given time of day, so as to always have an advantageous orientation, thereby increasing the output of the concentrating solar thermal system and improving energy capture.

Another object of the concentrating system is to maximise solar energy capture by also varying tower geometry in accordance with the time of day and position of the heliostats.

A further object of the variable-geometry concentrating solar thermal system is to allow variation in the height of the tower receiver in relation to the ground, provided through a relative movement between a fixed section and a mobile section of the tower. Therefore, the centre of the receiver moves within a maximum and a minimum height with the respect to the ground, allowing optimisation of the relative heliostat-receiver position for any given day and time to increase radiant energy capture.

### BRIEF DESCRIPTION OF THE DRAWINGS

A more detailed explanation of the invention is provided in the following description based on the following figures:
Figure 1 shows a diagram of a tower-type concentrating solar thermal energy capture system in accordance with the state of the art;
Figures 2 to 4 show the manner in which a heliostat reflects the solar radiation towards the tower of the tower-type concentrating solar thermal energy capture system in accordance with the state of the art;
Figure 5 shows a diagram of a variable-geometry tower-type concentrating solar thermal energy capture system;
Figure 6 shows a diagram of a detail of a rolling system of a carriage whereon a heliostat is installed;
Figure 7 shows a perspective view of the variable-geometry concentrating solar thermal energy capture system; and
Figure 8 shows a perspective view of the tower with its shaft deployed and retracted.

### DESCRIPTION OF AN EMBODIMENT

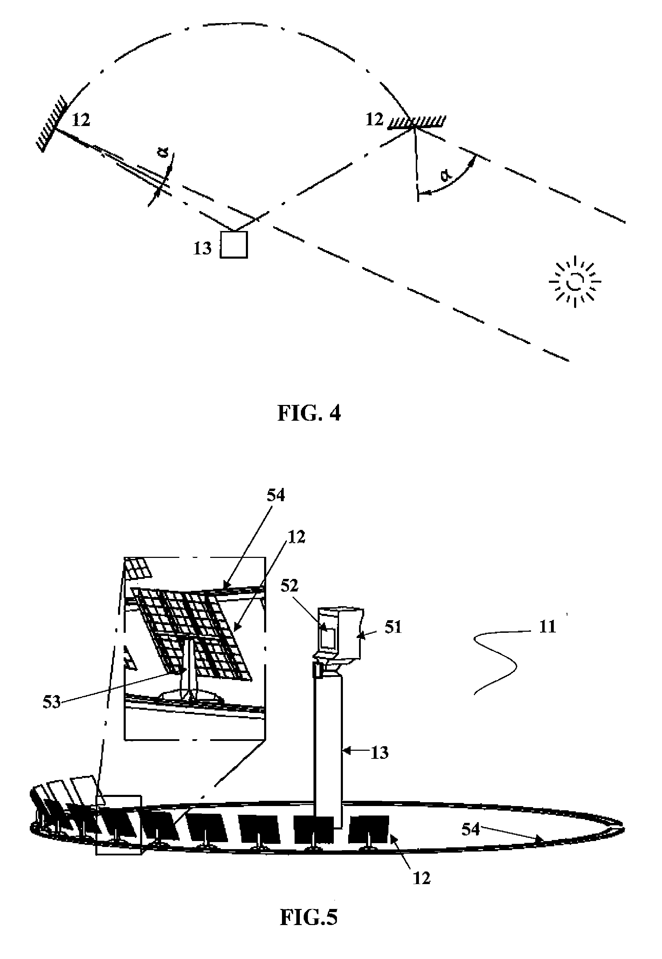

In relation to figure 5, a variable-geometry solar thermal energy capture system (11) comprises a plurality of heliostats (12), which are movable at will in accordance with the position of the sun at any given time of day; said heliostats (12) receiving solar energy from the sun for reflecting it towards the upper distal end (51) of a tower (13), the tower (13) housing, in said upper distal end (51), a receiver for receiving the radiation reflected by the heliostats (12) the reflected solar energy received being transformed into thermal energy which, in turn, is transformed into electrical or chemical energy, for example, hydrogen.

The heliostat (12) is disposed on a motorised carriage or mobile platform (53) that includes a displacement unit, namely a displacer that is horizontally displaceable in the heliostat field; a tracking unit, namely a solar tracker enabling azimuthal and zenithal rotation of the heliostat (12), and sends control signals to the displacer to position the heliostat (12) in such a manner that it reflects the maximum solar radiation incident thereupon to the receiver disposed on the upper distal end (51) of the tower (11), regardless of the sun's position throughout the day and year.

The heliostats (12) can move either along predefined paths or freely and autonomously over the surface of the heliostat field of the solar thermal system (11). The movement of the heliostats (12) along a predefined path facilitates both the supply of energy for the movements of the heliostat (12) and control thereof.

As the heliostat (12) can be moved from one position to another much more advantageous position from the viewpoint of the cosine effect, a smaller angle α implies a greater surface normal to the incident ray, thereby improving energy capture and offering the possibility of preventing the appearance of shadows produced by other heliostats (12) or by the tower (13) of the solar thermal system (11) itself.

The carriage (53) is equipped with a motorisation system, either autonomous or centralised, which allows it to move the heliostats from one position to another.

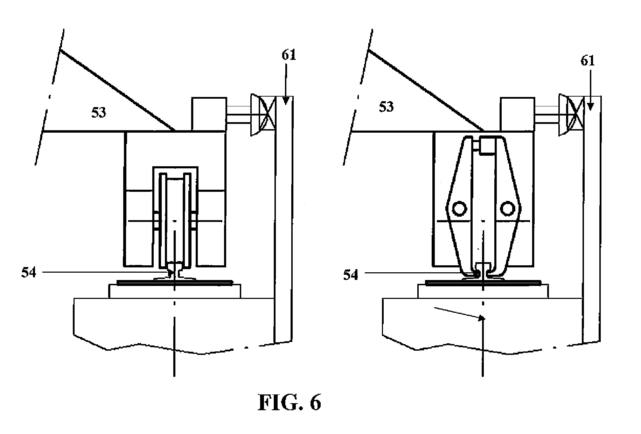

In relation to figure 6, the carriage (53) includes a rolling system of the type of solid or pneumatic wheels adapted to roll over prepared or unprepared ground, wheel and rail systems, air bag systems or even water floating platform systems, wherein the traction devices may be electromechanical as well as mechanically cable-pulled.

In relation to figures 5 and 6, the carriage (53) is adapted to move along a track (54) formed by two rails disposed parallel and concentric with respect to the tower (12), wherein other layouts of the rails other than a circular layout are also possible; whereon a plurality of carriages (53) circulate, each of which bearing a heliostat (12). A supply and control carriage (61) runs parallel to the carriages (54) adapted to supply electricity to the heliostats (12) and to send commands from a central control system to the heliostats (12).

The translational movement of the various heliostats (12) can be simultaneous or successive. Therefore, each heliostat (12) follows an individual path of horizontal translational movement and orientation throughout the day and year.

The heliostats (12) may move to a defensive position which is a configuration corresponding to a minimum exposure of surface area to the wind to guarantee their stability and integrity in the event of adverse weather phenomena such as strong winds.

However, it may occur that the sudden appearance of the weather phenomenon may prevent the completion of the defensive positioning manoeuvre of the heliostat (12). Therefore, the carriage (53) comprises a wheel set-type stress absorber, namely hydraulically or electromechanically actuated claws disposed underneath the support rail (54) to materialise the emergency anchoring of the heliostats (12) to the support rail (54), therefore being capable of absorbing vertical traction stress. The stress absorber may be necessary even when the heliostats (12) have been moved to the defensive position.

The tracker governs the azimuthal rotation and zenithal rotation of the heliostat (12) and, also, the horizontal movement of the mobile frame (53) on the ground.

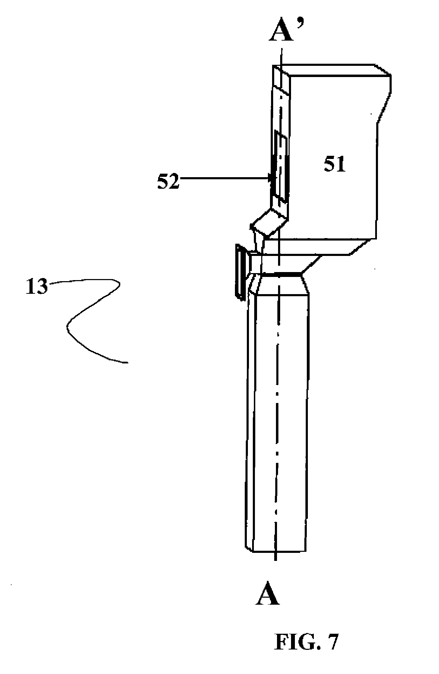

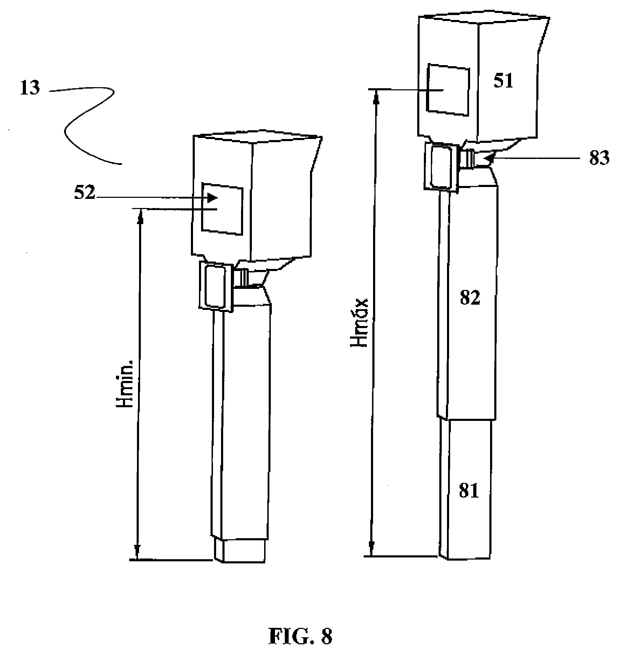

In relation to figures 7 and 8, the tower (13) comprises, from the foundations thereof, a fixed shaft section (81) that rises substantially vertically from the foundations; a mobile shaft section (82), namely a telescopically assembled shaft section which allows the telescopic shaft section (82) to move upwards or downwards along a vertical AA' axis of the tower (13); and a rotating section (83) in the form of a rotating nacelle, comprising a cavity (52) where the tower (13) receiver is housed.

As the heliostats (12) execute their translational movement around the tower (13), the reflected rays rotate simultaneously towards the tower (13) receiver and, in order to ensure the maximum use of the captured energy, the azimuthal orientation of the receiver is performed simultaneously or successively to the translational movement of the heliostats (12).

The rotating nacelle (83) allows the receiver to rotate with respect to a vertical AA' axis of the tower (13), in such a manner that the rotating nacelle (83) moves along an arc of a circle in both directions of rotation, i.e. west-east and vice versa.

The receiver is disposed in the cavity (52) of the upper distal end (51) of the tower (13) and joined mechanically to the rotating nacelle (83), in such a manner that the receiver axis is aligned with the rotation axis of the nacelle (83), totally preventing the risk of blur occurring during the movements of the system, thereby achieving maximum energy capture in the centre of the receiver plane.

The telescopic shaft section (82) is joined by its upper or distal part to the lower (also called proximal part) of the rotating nacelle (83) by a rotary mechanical joining device which allows the rotating nacelle (83) to rotate with respect to the telescopic shaft section (82).

The rotary mechanical joining device is of the toothed bearing type which enables the rotation of the rotating nacelle (83) and, therefore, of the receiver itself.

The telescopic shaft section (82) is joined by its proximal or lower part to the upper part of the fixed shaft section (81) by a lifting and lowering mechanical joining device that enables upward and downward vertical translational movement of the telescopic shaft section (82) with respect to the fixed shaft section (81) around the vertical axis AA'.

The lifting device is of the self-climbing type, comprising a telescopic and guidance mechanism which, in turn, includes an assembly of mechanical cylinders and claws, in such a manner that the telescopic shaft section (82) performs an upward or downward movement as a result of the successive extension and compression movements of the cylinder assembly,

The lifting device may be of different types: rack and pinion, cylinder with pulley assembly, etc.

The rotating nacelle (83) and the mobile shaft section (82) comprise protection elements to prevent damages caused by the concentrated solar radiation incident upon parts of the rotating nacelle (83) external to the tower receiver (11).

## Claims

1. **A concentrating solar thermal energy capture system** comprising a tower (13) and heliostats (12), **characterised in that** the tower (13) comprises a fixed shaft section (81) and a mobile shaft section (82) that cooperate mechanically to vary the height of the tower (13).

2. A **system,** in accordance with claim 1, **characterised in that** the system (11) also comprises a plurality of heliostats (12) horizontally movable at will in accordance with the position of the sun throughout the day.

3. A **system,** in accordance with claim 1, **characterised in that** the tower (13) also comprises a rotating section (83) having a rotating assembly at the distal end of the mobile shaft section (82), and the rotating section (83) is rotatable with respect to the axis AA' of the tower (13).

4. A **system,** in accordance with claim 3, **characterised in that** the rotating section (83) comprises a receiver adapted for being housed in a cavity (52) of the distal end of the tower (13).

5. A **system,** in accordance with claim 4, **characterised in that** the geometric centre of the receiver coincides with the azimuthal rotation axis AA' of the rotating nacelle (83).

6. A **system,** in accordance with claim 2, **characterised in that** the heliostat (12) is adapted for being mounted on a mobile carriage (53) that includes: a displacement unit that is horizontally displaceable, a rotary unit adapted for rotating the heliostat (12) azimuthally and zenithally, a power supply unit and a tracking unit adapted for sending control signals to the displacement, and rotary unit so that the heliostat (12) follows the position of the sun at all times, reflecting the maximum incident solar radiation towards the receiver housed in a cavity (52) of the distal end of the tower (13).

7. A **system,** in accordance with claim 6, **characterised in that** the tracking unit is adapted for independently sending control signals to the displacement and/or rotary unit.

8. A **tower** of a concentrating solar thermal energy capture system, **characterised in that** the tower (13) comprises a fixed shaft section (81) and a mobile shaft section (82) that cooperate mechanically to vary the height of the tower (13).

9. A **tower,** in accordance with claim 8, **characterised in that** the tower (13) also comprises a rotating section (83) mechanically assembled on the distal end of the mobile shaft section (82), where the rotating section (83) is rotatable with respect to the axis AA' of the tower (13).

10. A **tower,** in accordance with claim 9, **characterised in that** the tower (13) comprises a receiver housed in a cavity (52) at the distal end of the tower (13).

11. A **tower,** in accordance with claim 10, **characterised in that** the geometric centre of the receiver input window plane coincides with the azimuthal rotation axis AA' of the rotating nacelle (83).

12. A **tower,** in accordance with claim 8, **characterised in that** the rotating section (83) comprises a free area adapted for allowing the passage of rigid and/or flexible ducts.
